# EUROPEAN PATENT APPLICATION

(11) **EP 3 396 115 A1**
(43) Date of publication of application: **31.10.2018**
(21) Application number: 17188589.0
(22) Date of filing: 30.08.2017
(51) Int. Cl.: F01D 21/04, F02K 3/06

(54) **GAS TURBINE ENGINE**

(30) Priority: 28.04.2017 EP 17168699
(71) Applicant: Rolls-Royce Deutschland Ltd & Co KG, 15827 Blankenfelde-Mahlow (DE)
(72) Inventor: BONIFACE, Dominic, 10779 Berlin (DE)
(74) Representative: Maikowski & Ninnemann Patentanwälte Partnerschaft mbB

(57) **Abstract**

The invention relates to a gas turbine engine (10) with a geared turbofan arrangement with a torque transmission device (60) connecting two co-axial parts, in particular co-axial shafts (1, 2) in the drive train (105, 103, 101), the torque transmission device (60) having a defined torque transmission characteristic with a face gear connection comprising interlocking frontal teeth (61, 62), designed such that a directional change and / or torque magnitude change deviated from a nominal rotation (N) condition causes a disengagement of the frontal teeth connection (61, 62).

## Description

The invention relates to a gas turbine engine with the features of claim 1.

Gas turbine engines, in particular aircraft engines with geared turbofan arrangements, require some means to mitigate damages that might occur after a failure. A failure might involve the rotation prevention of at least one part of the drive train. Such a failure might be e.g. a shaft breaking, a rotor-casing contact or a bearing seizure. This becomes even more important for high bypass ratio engines in which the drag of a locked fan would be considerable. Under an extreme event an excessive torque is experienced in the non-nominal rotation direction.

Therefore, gas turbine engines with an improved resilience are required.

This is addressed by a gas turbine engine with the features of claim 1.

The gas turbine engine comprises a torque transmission device connecting two co-axial parts, in particular co-axial shafts in the drive train, the torque transmission device having a defined torque transmission characteristic with a face gear connection comprising interlocking frontal teeth designed so that a directional change and / or torque magnitude change deviated from a nominal rotation condition causes a disengagement of the frontal teeth connection.

In particular, one embodiment can comprise a face gear connection with first frontal teeth and second frontal teeth, the teeth being symmetric relative to a rotational axis. Examples for symmetric teeth are teeth, formed as a Hirth Coupling or a curvic coupling.

Alternatively, the face gear connection of the torque transmission device comprises first frontal teeth and second frontal teeth, the teeth being asymmetric relative to a rotational axis. In one embodiment the face gear connection can comprise the asymmetric teeth inducing an axial load under torque. An example for asymmetric teeth are saw-toothed teeth.

In a further embodiment the face gear connection is disengageable after exceeding a predetermined axial load and / or a predetermined differential torque acting on the face gear connection.

Furthermore, the torque transmission device can comprise at least one mechanical fuse and / or is coupled to at least one mechanical fuse to break under a predetermined torque transmitted through the face gear connection. The mechanical fuse can e.g. comprise at least one pin due to break under a predetermined shear load in the face gear connection. It is also possible that the at least one pin is part of a bolted flange connection, coupled with the face gear connection.

In a further embodiment, structural parts of the gas turbine engine, in particular the first shaft the second shaft, a fixed structure of the gas turbine engine and / or a link have individually or collectively a predetermined stiffness so that a directional change and / or torque magnitude change deviated from a nominal rotation condition causes a disengagement of the frontal teeth connection of the at least one torque transmission device. This means that the deformations of the part under torque are evaluated under the assumptions the stiffness of the parts. The stiffness of the parts is then varied so that the deformations under the predetermined torque effect the disengagement of the at least one torque transmission device.

The gas turbine engine is in one embodiment a geared turbofan arrangement with a gearbox in a drive train driven by a turbine, a driving side of the gearbox being driveably connected with a propulsive fan. The transmission device can e.g. couple through the gear face connection a propulsive fan and a turbine, a propulsive fan and an output side of a gearbox and / or an input side of a gearbox and turbine.

This allows a torque limiting coupling which joins, for example, a fan to a turbine or a fan to a gearbox or a gearbox to a turbine in a gas turbine engine. If the turbine or gearbox seizes, the torque leads to failure of the coupling, thereby allowing the fan to continue to rotate. The device makes use of a coupling of torsional and axial loads.

In one embodiment the at least one torque transmission device is located on the output side of the gearbox, i.e. in particular the planetary gearbox.

Embodiments can be in particular configured as a geared turbofan engine of an aircraft.

Embodiments of the invention are shown in the figures, where
- Fig. 1: shows a schematic drawing of a gas turbine engine according to the prior art;
- Fig. 2: shows an embodiment of a transmission device with a symmetric face gear connection;
- Fig. 3: shows a further embodiment of a transmission device with a symmetric face gear connection;
- Fig. 4: shows a further embodiment of a transmission device with a symmetric face gear connection for tubular shafts;
- Fig. 5: shows an embodiment of a transmission device with an asymmetric face gear connection under nominal rotation;
- Fig. 5A: shows the embodiment of Fig. 5 under non-nominal rotation;
- Fig. 6A: shows a further embodiment with a mechanical fuse and a fan catcher in a first position (engagement);
- Fig. 6B: shows the embodiment of Fig. 6A in a second position (disengagement);
- Fig. 7A: shows a further embodiment in a first position (engagement);
- Fig. 7B: shows the embodiment of Fig. 7A in a second position (disengagement).

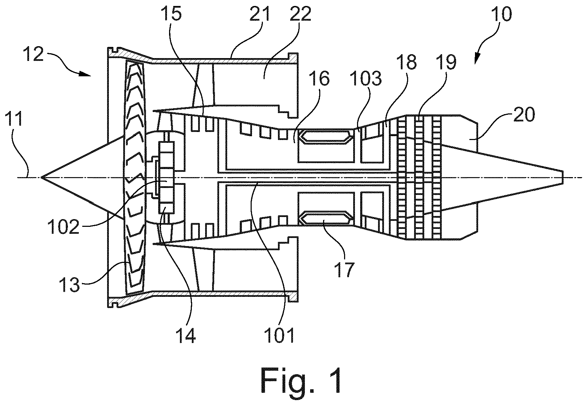

With reference to Fig. 1, a gas turbine engine is generally indicated at 10, having a principal and rotational axis 11. The engine 10 comprises, in axial flow series, an air intake 12, a propulsive fan 13 (could be more than one stage), a gearbox 14, an intermediate pressure compressor 15, a high-pressure compressor 16, a combustion equipment 17, a high-pressure turbine 18, an intermediate-pressure turbine 19 and an exhaust nozzle 20. A fan casing 21 generally surrounds the engine 10 and defines the intake 12.

The gas turbine engine 10 works in the conventional manner so that air entering the intake 12 is accelerated by the propulsive fan 13 to produce two air flows: a first air flow into the intermediate pressure compressor 15 and a second air flow which passes through a bypass duct 22 to provide propulsive thrust. The intermediate pressure compressor 15 compresses the air flow directed into it before delivering that air to the high pressure compressor 16 where further compression takes place.

The compressed air exhausted from the high-pressure compressor 16 is directed into the combustion equipment 17 where it is mixed with fuel and the mixture is combusted. The resultant hot combustion products then expand through, and thereby drive the high pressure turbine 18 and intermediate pressure turbine 19 before being exhausted through the nozzle 20 to provide additional propulsive thrust. The high pressure turbine 18 and the intermediate pressure turbine 19, respectively, drive the high pressure compressor 16 and the intermediate pressure compressor 15, each by suitable interconnecting shaft assembly.

An intermediate pressure shaft 101 also drives the propulsive fan 13 via the gearbox 14. The gearbox 14 is a reduction gearbox in that it gears down the rate of rotation of the propulsive fan 13 by comparison with the intermediate pressure compressor 15 and intermediate pressure turbine 19.

The gearbox 14 is an epicyclic planetary gearbox having a static ring gear, rotating and orbiting planet gears supported by a planet carrier and a rotating sun gear 102. In the embodiment shown the output of the gearbox 14 is through the carrier. In principle other gearbox 14 designs can be used.

The embodiment shown in Fig. 1 has a specific shaft arrangement which is understood not to be limiting. The embodiments described in the following can also work with a 2- or 3-shaft arrangement.

As shown in Fig. 1, geared turbofan engines 10 are known in the art. With increasing power ratings and / or increasing diameters of the propulsive fans 13, the loads on the gas turbine engines 10 are increasing. Therefore, it seems advisable to introduce measures to counteract potential failure modes or extreme events such as e.g. a fan blade off, a core blade off, a bird strike, a surge load, a mainline bearing seizure or an event at the gearbox 14.

Since in geared turbofan engines 10 the torque overload can be an issue, some embodiments for a torque transmission device 60 having a defined torque transmission characteristic are described below. It should be noted that the embodiments can be applied to gas turbo engines other than geared turbofan engines.

The embodiments of the torque transmission devices 60 use face gear connection comprising interlocking frontal teeth 61, 62 to connect co-axial shafts 1, 2. This face gear connection 61, 62 designed such that a directional change and / or a torque magnitude change deviating from a nominal rotation condition causes a disengagement of the frontal teeth connection 61, 62. This means that the face gear connection 61, 62 can react to a change in rotation and / or significantly higher torque indicating an extreme event by disengaging the shafts 1, 2.

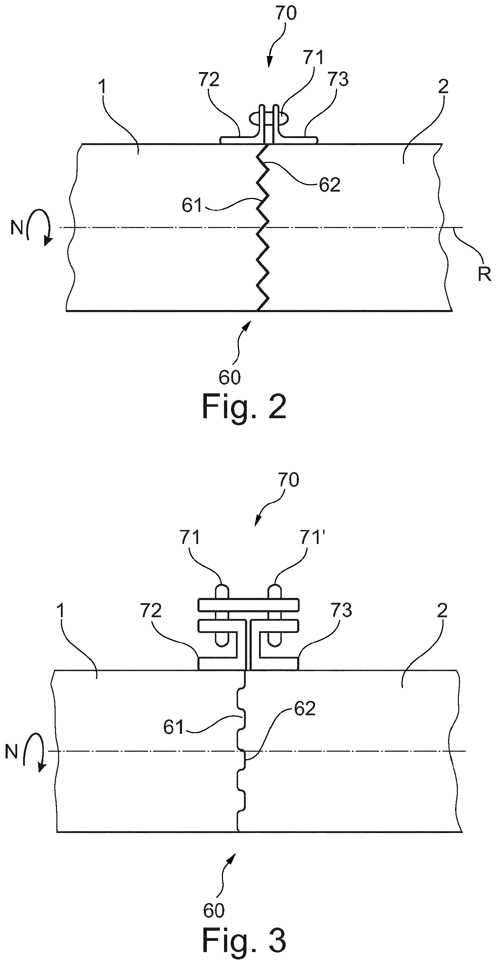

In Fig. 2 a connection of two co-axial shafts 1, 2 is schematically shown. For the sake of simplicity the shafts 1, 2 are shown here as cylindrically shaped bodies. In alternative embodiments, the shafts 1, 2 can have a much more complex shape, in particular in the radial direction.

The torque transmission device 60 here comprises a face gear connection with teeth 61, 62 extending in axial direction, formlocking with each other. The teeth 61, 62 in this embodiment are symmetrical to a rotation axis R with the nominal rotation direction N indicated by an arrow. The teeth 61, 62 have a triangular cross section with linear walls, which is also called a Hirth Coupling.

At the circumference of the co-axial shafts 1, 2 a mechanical fuse 70 is schematically shown. For the sake of simplicity only one mechanical fuse 70 is shown here. Generally, a plurality of mechanical fuses 70 are positioned around the circumference of the shafts 1, 2 in a symmetrical way, i.e. the mechanical fuses 70 have an identical angular distance to each other.

The mechanical fuse 70 comprises a flange, with flange elements 72, 73 being positioned axially on either side of the face gear connection 61, 62. The flange elements 72, 73 are connected by a bolt (or pin) 71 which here is extending in axial direction.

Under nominal conditions the face gear connection 61, 62 ensures the reliable transmission of torque. Under excessive torque conditions, i.e. with a torque being much higher than the nominal torque, the toothed formlocking face gear connection 61, 62 as well as the mechanical fuse 70 fail under this predefined overtorque transmitted through the face gear connection 61, 62; i.e. the shafts 1, 2 disengage.

In Fig. 3 a variation of the embodiment depicted in Fig. 2 is shown so that reference can be made to the respective description above. This embodiment used curvic teeth instead of triangular shaped teeth.

As in the embodiment shown in Fig. 2 the curvic face gear connection comprises teeth 61, 62 in an axially symmetric spacing. The cross section of the teeth is curved and not straight as in the embodiment shown in Fig. 2. The curvic face gear connection 61, 62 is just another way in connecting two co-axial shafts 1, 2 through axially oriented teeth 61, 62.

The embodiment shown in Fig. 3 also comprises a mechanical fuse 70 using flange elements 72, 73, 74. The first and second flange elements 72, 73 - generally having a U-shaped cross section - are positioned on either side of the face gear connection 61, 62. The open sides of the U-shaped flange elements 72, 73 point away from the face gear connection 61, 62.

Radially outward an outer third flange element 74 extends across both flange elements 72, 72 underneath.

On both sides of the face gear connection 61, 62 pins 71, 71' are connecting the outer flange element 74 to the inner flange elements 72, 73. The long axes of the pins 71, 71' are here oriented perpendicular to the rotation axis R.

In case of an overtorque the pins 71, 71' are subjected to shear forces as to break under a predefined torque transmitted through the face gear connection.

The different arrangements of the mechanical fuse 70 in the embodiment in Fig. 2 can be interchanged with the mechanical fuse 70 shown in Fig. 3.

The embodiments shown in Fig. 2 and 3 can be used for solid shafts or tubular co-axial shafts 1, 2.

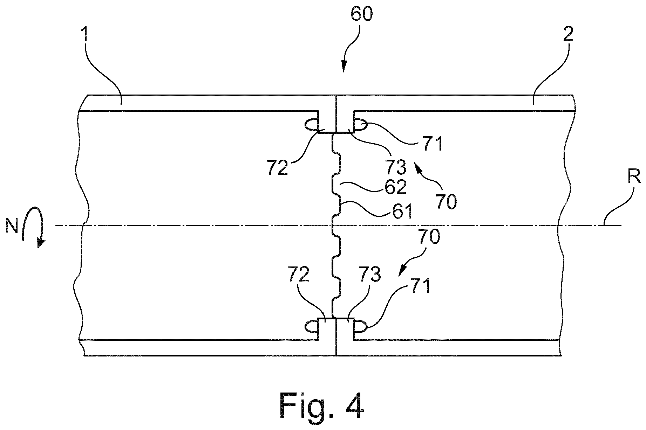

The embodiment shown in Fig. 4 shows a face gear connection 61, 62 with tubular shafts 1, 2. The flange elements 72, 73 of the mechanical fuses 70 are here located at the inside of the shafts 1, 2. Like in the embodiment shown in Fig. 2, the pins 71 are positioned in an axial way. The curvic teeth 61, 62 are symmetric with respect to the rotating axis R.

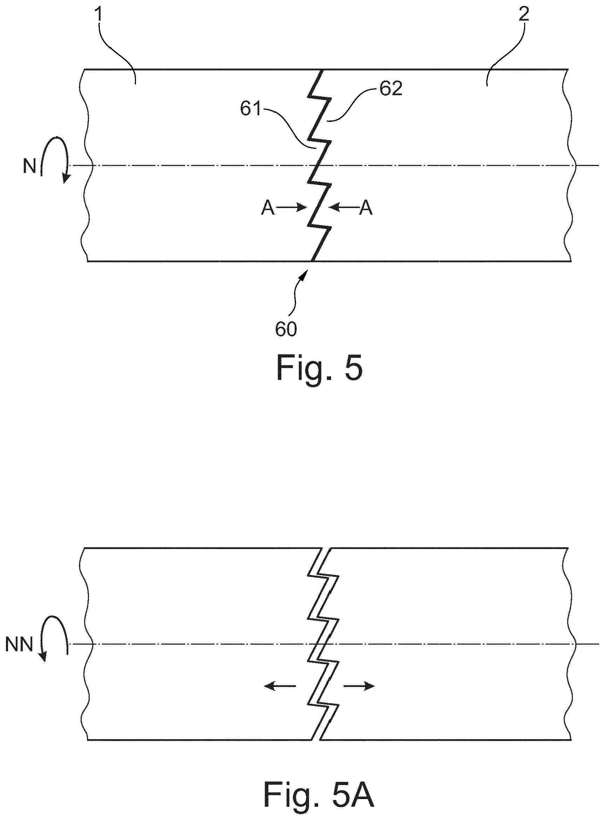

In Fig. 5 an embodiment with a face gear connection with asymmetric shaped teeth 61, 62 is shown. The saw-tooth shaped teeth 61, 62 can transmit torque in one direction and separate the co-axial shafts 1, 2, in case the rotation direction changes. In the embodiment shown in Fig. 5, the first shaft 1 drives the second shaft 2 in the nominal rotation direction N. The axial force A generated by the sloped teeth 61, 62 is indicated.

In case the rotational direction is reversed into the non-nominal direction NN the two shafts 1, 2 disengage, the axial forces A would change their direction, as shown in Fig. 5A.

The amount of torque required to disengage the face gear connection 61, 62 can be controlled in a number of ways.

In one embodiment, the axial stiffness of the shafts 1, 2 only permits a predetermined axial load. The end restraints of the shafts 1, 2, at the ends away from the face gear connection 61, 62, have an axial stiffness which only permits sufficient axial movement at the teeth 61, 62 when a certain torque, and in turn a certain axial load, is applied.

An alternative way to control the torque can use a shaft 1 with an end restraint which is free to move axially, or the shaft 1 itself is not restrained in the axial direction. However, the shaft 1 that is free to move axially also experiences a torque from another source, for example a propulsive fan 13. Therefore, two different torques act on the shafts 1, 2. The torque differential between the shafts 1, 2, if exceeded in the direction of disengagement, separates the shafts.

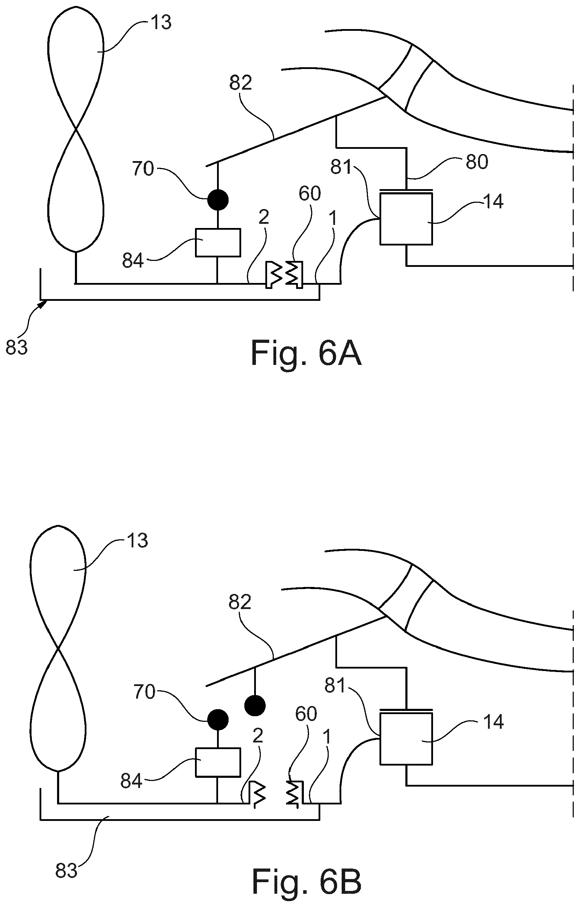

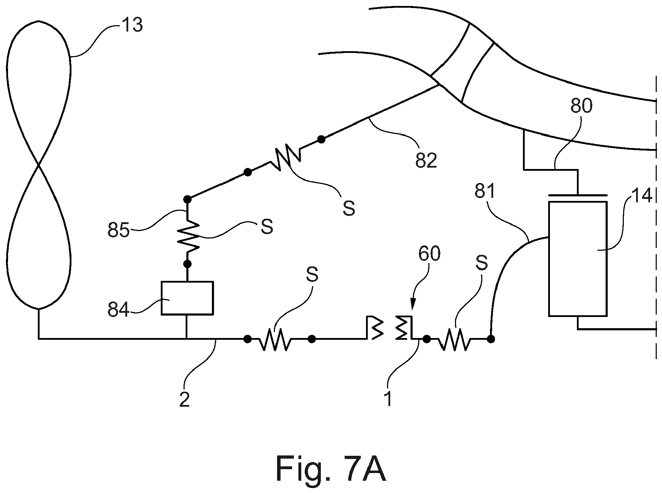

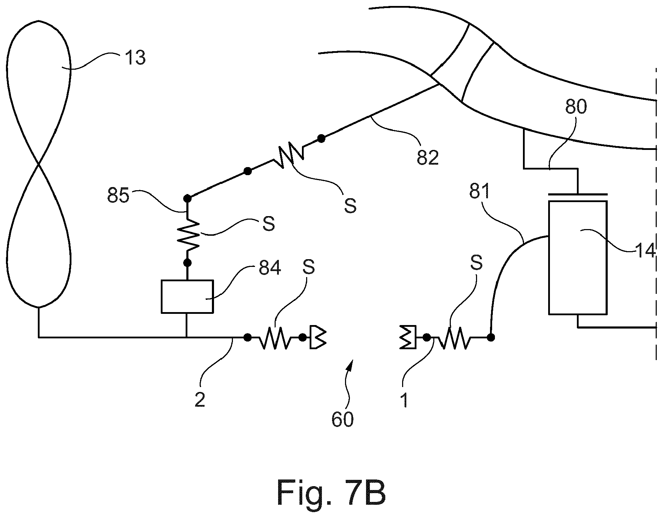

In Fig. 6 and 7 applications of embodiments in gas turbine engine, i.e. a geared turbofan engine 10 of an aircraft are shown. In both embodiments a torque transmission device 60 is operating on the output side of the gearbox 14.

Fig. 6A and 6B show a front section of the engine 10 with the planetary gearbox 14 in different positions.

The planetary gearbox 14 comprises a fixed ring gear mount 80 and a torque output via a carrier 81. The planetary gearbox 14 is driven through it sun gear.

The carrier 81 is coupled to the first shaft 1. The first shaft 1 and the second shaft 2 are connected through the torque transmission device 60. The ring gear mount 80 is connected to some fixed structure 82 of the gas turbine engine 10. A mechanical fuse 70 is positioned between the fixed structure 82 and the second shaft 2 and connected to a bearing 84.

Under normal operating conditions (Fig. 6A), the torque from the carrier is transmitted via the torque transmission device 60 to the second shaft 2 and then to the propulsive fan 13. In the embodiment shown the torque transmission device 60 is coupled with the mechanical fuse 70 which is configured to break under predetermined torque conditions. The torque transmission device 60 and the mechanical fuse 70 are in a engaged first position.

The breaking of the mechanical fuse 70 is shown in Fig. 6B. Here the torque shows a directional change and / or a magnitude change deviating from the nominal rotation condition causing a disengagement of the frontal teeth connection of the torque transmission device. The mechanical fuse 70 is broken. Both disengagement events are causing an axial movement of the second shaft 2 and the propulsive fan 13. A fan catcher 83 limits the axial movement of the propulsive fan 13 under these non-nominal conditions (i.e. a second position).

In Fig. 7A an engaged first position of the frontal section of the geared turbofan engine 10 as gas turbine engine is shown. As in the embodiment shown in Fig. 6A, 6B the planetary gearbox 14 comprises a fixed ring gear mount 80 and a torque output via a carrier 81. The carrier 81 is coupled to the first shaft 1. The first shaft 1 and the second shaft 2 are connected through the torque transmission device 60. The ring gear mount 80 is connected to some fixed structure 82 of the gas turbine engine 10. But in this embodiment no mechanical fuse 70 is used.

The drive train from the gearbox 14 to the propulsive fan 13 comprises a torque transmission device 60 designed such that a directional change and / or torque magnitude change deviated from a nominal rotation N condition causes a disengagement of the frontal teeth connection 61, 62 of the torque transmission device 60.

The disengagement is facilitated by the tailored design of the stiffnesses S of structural parts, i.e. the first shaft 1, the second shaft 2, the fixed structure 82 and a link 85 from the fixed structure 82 to the bearing 85. Under nominal conditions (Fig. 7A) the torque transmission takes place via the torque transmission device 60. This means that under nominal conditions the parts 1, 2, 82, 85 are so stiff that the torque cannot open the torque transmission device 60, i.e. there a in a first position.

Under non-nominal operation conditions (Fig. 7B), e.g. under an excessive torque, the stiffness of the parts 1, 2, 82, 85 is so designed, that the parts 1, 2, 82, 85 are deformed in a controlled manner, so that he torque transmission device 60 is becoming disengaged. In the example of Fig. 7B, the shaft 2 has as stiffness which allows the disengagement. In other embodiments the stiffness of two or more parts together allows the disengagement.

In other embodiments, the stiffness of other parts involved on the output side of the gearbox 14 can be specifically tailored to allow a controlled disengagement of the torque transmission device 60.

### List of reference numbers

- 1: first shaft
- 2: second shaft

- 10: gas turbine engine
- 11: principal rotational axis
- 12: air intake
- 13: propulsive fan
- 14: gearbox, power gearbox
- 15: intermediate pressure compressor
- 16: high-pressure compressor
- 17: combustion equipment
- 18: high-pressure turbine
- 19: intermediate-pressure turbine
- 20: exhaust nozzle
- 21: fan casing
- 22: by-pass duct

- 60: torque transmission device
- 61: first frontal teeth of face gear connection
- 62: second frontal teeth of face gear connection

- 70: mechanical fuse
- 71: pin
- 72: first flange element
- 73: second flange element
- 74: third flange element

- 80: ring gear mount
- 81: carrier of planetary gearbox
- 82: fixed structure
- 83: fan catcher
- 84: bearing
- 85: link

- A: Axial force / load
- N: nominal rotation
- NN: non-nominal rotation
- R: rotational axis

## Claims

1. Gas turbine engine (10) with a torque transmission device (60) connecting two co-axial parts, in particular co-axial shafts (1, 2) in the drive train (105, 103, 101), the torque transmission device (60) having a defined torque transmission characteristic with a face gear connection comprising interlocking frontal teeth (61, 62), designed such that a directional change and / or torque magnitude change deviated from a nominal rotation (N) condition causes a disengagement of the frontal teeth connection (61, 62).

2. Gas turbine engine according to claim 1, wherein the face gear connection (60) comprises first frontal teeth (61) and second frontal teeth (62), the teeth (61, 62) being symmetric relative to a rotational axis (R).

3. Gas turbine engine according to claim 2, wherein the teeth are formed as a Hirth Coupling or a curvic coupling.

4. Gas turbine engine according to claim 1, wherein the face gear connection of the torque transmission device (60) comprises first frontal teeth (61) and second frontal teeth (62), the teeth (61, 62) being asymmetric relative to a rotational axis (R).

5. Gas turbine engine according to claim 4, wherein the face gear connection (61, 62) with the asymmetric teeth (61, 62) induces an axial load (A) under torque.

6. Gas turbine engine according to claim 4 or 5, wherein the teeth (61, 62) are saw-toothed.

7. Gas turbine engine according to at least one of the preceding claims, wherein the face gear connection (61, 62) is disengageable after exceeding a predetermined axial load (A) and / or a predetermined differential torque acting on the face gear connection (61, 62).

8. Gas turbine engine according to at least one of the preceding claims, wherein the torque transmission device (60) comprises at least one mechanical fuse (70) and / or is coupled with a mechanical fuse (70) to break under a predetermined torque transmitted through the face gear connection

9. Gas turbine engine according claim 8, wherein the at least one mechanical fuse (70) comprises at least one pin (71, 71') due to break under a predetermined shear load in the face gear connection (61, 62).

10. Gas turbine engine according to claim 8 or 9, wherein the at least one pin (71, 71') is part of a bolted flange connection (72, 73, 74) coupled with the face gear connection (61, 62).

11. Gas turbine engine according to at least one of the preceding claims, wherein structural parts, in particular the first shaft (1), the second shaft (2), a fixed structure (84) of the gas turbine engine (10) and / or a link (84) have individually or collectively a predetermined stiffness (S) so that a directional change and / or torque magnitude change deviated from a nominal rotation (N) condition causes a disengagement of the frontal teeth connection (61, 62).

12. Gas turbine engine according to at least one of the preceding claims, wherein the gas turbine engine is a geared turbofan arrangement with a gearbox (14) in a drive train (105, 103, 101) driven by a turbine (18, 19), a driving side of the gearbox (14) being driveably connected with a propulsive fan (13).

13. Gas turbine engine according to at least one of the preceding claims, wherein the transmission device (60) with the gear face connection (61, 62) torque is transmittable between a propulsive fan (13) and a turbine (18, 19), a propulsive fan (13) and an output side of a gearbox (14) and / or an input side of a gearbox (14) and turbine (18, 19).

14. Gas turbine engine according to at least one of the preceding claims, wherein the at least one torque transmission device (60) is located on the output side of the gearbox (14).

15. Gas turbine engine according to at least one of the preceding claims, wherein it is configured as a geared turbofan engine of an aircraft.
